(19) Europäisches Patentamt
European Patent Office
Office européen des brevets

(11) EP 3 626 759 A1

(12) EUROPEAN PATENT APPLICATION

(43) Date of publication:
**25.03.2020 Bulletin 2020/13**

(21) Application number: **18196013.9**

(22) Date of filing: **21.09.2018**

(51) Int Cl.:
***C08G 63/685*** (2006.01) ***C08G 69/40*** (2006.01)
***C08G 69/44*** (2006.01) ***C08L 77/12*** (2006.01)
***C08L 77/06*** (2006.01) ***B32B 17/04*** (2006.01)
***B32B 27/34*** (2006.01) ***B32B 27/36*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Erfindergemeinschaft Lorenz + Grahneis GbR**
**48565 Steinfurt (DE)**

(72) Inventors:
- **Lorenz, Reinhard**
  **48565 Steinfurt (DE)**
- **Grahneis, Marco**
  **48161 Münster (DE)**
- **Becker, Matthias**
  **26215 Wiefelstede (DE)**
- **Goossen, Jan-David**
  **48149 Münster (DE)**

(74) Representative: **Ter Meer Steinmeister & Partner Patentanwälte mbB**
**Nymphenburger Straße 4**
**80335 München (DE)**

# (54) HIGH-TEMPERATURE-UP-RESINS (HT-UP RESIN) BASED ON CYCLIC AND NON-CYCLIC RAW MATERIALS (HT-UP)

(57) The present invention relates to a composition comprising (i) an unsaturated dicarboxylic acid, an ester or an anhydride thereof and (ii) aliphatic diol, (iii) dianhydrohexitol (iv), cyclo aliphatic diol and / or aromatic aliphatic diol, and (v) an amide-forming agent. Further, the invention relates to an unsaturated polyesteretheramide obtainable by condensation of the composition of the invention and to an unsaturated polyesteretheramide resin comprising the unsaturated polyesteretheramide and a reactive diluent. The invention further relates to a thermoset with high thermomechanical properties.

EP 3 626 759 A1

## Description

The present invention relates to a composition comprising (i) an unsaturated dicarboxylic acid, an ester or an anhydride thereof and (ii) aliphatic diol, (iii) dianhydrohexitol (iv), cyclo aliphatic diol and / or aromatic aliphatic diol, and (v) an amide-forming agent. Further, the invention relates to an unsaturated polyesteretheramide obtainable by condensation of the composition of the invention and to an unsaturated polyesteretheramide resin comprising the unsaturated polyesteretheramide and a reactive diluent. The invention further relates to a thermoset with high thermo-mechanical properties. Moreover, the thermosets according to the invention are characterized by glass transition temperatures ≥ 200 °C and preferably characterized by minimal emissions at high temperatures.

Generally, resins, when cured to a thermoset, are reported to shrink when crosslinked (cured). That is to say that curing of a resin to a thermoset can result in small, undesired form deviations between the form of the mold for the resin and the actual form of the cured molded part (thermoset). Shrinkage may also cause internal stress in the molded part and warpage.

Non-shrinkable molded parts obtained from unsaturated polyester resin are for example described in DE 41 14 249. Generally, an unsaturated polyester resin is referred to as an unsaturated polyester in the presence of a reactive diluent, where the resin can be cured to obtain a thermoset. An advantage of unsaturated polyester resin, for example compared to phenolic or melamine resins, is the fact that it is possible to compensate curing shrinkage such that even complex molded part geometries can be achieved. In addition, the curing process runs substantially in the absence of the production of cleavage products. Stress-free and warpage-free molded parts with advantageously paintable surfaces can be achieved. For that kind of molded part there is a plurality of applications, for example in the automotive construction, in electrical engineering, in civil engineering and in mechanical engineering. In cars, trucks, busses, rail cars and agricultural vehicles molded parts even compete with metallic components such as aluminium pressure casting or steel sheet.

Further, in several applications molded parts are required to be resistant to elevated temperatures of up to 250 °C.

In the art there are unsaturated polyester resins which are used in high-temperature applications. For example, Palapreg® P18-21 (based on an unsaturated polyester obtained from maleic anhydride and 1,2-propylene glycol) and Palapreg® P18-03 (based on an unsaturated polyester obtained from maleic anhydride and 1,2-propylene glycol as well as neopentyl glycol) are commercially available from Aliancys™, wherein these products are known in the art under the term "Pure maleics". These products make it possible that a complex geometry of the molded part can be precisely replicated. The obtained molded parts exhibit glass transition temperatures up to 185 °C as well as substantially constant mechanical properties up to about 100 °C. In addition, they are constantly resilient up to 180 °C and show a short-term temperature resistance up to 200 °C. At these temperatures said molded parts are reported to be prone to a significant emission of volatile components due to the beginning of thermal network disintegration, in particular due to ester pyrolysis. In addition, above the glass transition temperature of the thermoset, its network works but poorly as a diffusion barrier, such that the release of volatile (low-molecular) compounds such as by-products is enabled or facilitated.

It was tried to substitute the resins based on a polyester of maleic acid and propylene glycol (Pure Maleics) by alternative resins to obtain resulting thermosets with higher glass transition temperatures. For example, DE 102 49 400 describes unsaturated polyester resins, wherein neopentyl glycol, ethylene glycol and dipropylene glycol are used as diol component for the preparation of the unsaturated polyester. The resulting thermosets have a glass transition temperature of up to around 215 °C. Nevertheless, even thermosets obtained from these resins are reported not to exhibit a significantly improved long-term temperature resistance compared to the thermosets obtained from the above-mentioned Palapreg®-mixtures, since it appears that the thermal disintegration of the network by ester pyrolysis could not be significantly reduced.

Unsaturated polyester resins based on dicyclopentadiene (also referred to as DCPD), maleic anhydride and diols (like ethylene glycol or neopentyl glycol) may yield thermosets with glass transition temperatures up to 225 °C if two conditions are fulfilled equally: Firstly, the polyester must contain high amounts of DCPD end groups attached to the maleic or fumaric unit formed by isomerization of the maleic unit. The product can for example be obtained by the reaction of two moles of DCPD, two moles of maleic anhydride and one mole of ethylene glycol. Thus, the reaction product is more an unsaturated oligoester than a polyester. Further, the reaction product is dissolved in styrene and cured. Secondly, to achieve the high glass transition temperatures mentioned above, additional post cure in the presence of oxygen must be done under quite severe conditions such as 2 weeks or longer at 180 to 200 °C. By this, a slow but continuous thermo-oxidative coupling of the DCPD units is achieved which is gradually raising the crosslink density and the glass transition temperature of thermoset. Commercial products of this DCPD-type were for instance Daron® 11-102 and Daron® 11-103 manufactured by Aliancys™.

Thus, there is still a need for thermosets showing substantially fast curing and having an excellent long-term temperature resistance.

Hence, it was an object of the present invention to overcome the above drawbacks. In particular, it was an object of the present invention to provide a resin and /or a corresponding thermoset, wherein the glass transition temperature of the cured molded part should be enhanced. Preferably, the loss of the module should not occur at temperatures

until 150 °C. The glass transition temperature of the crosslinked molded part should be enhanced to a value between 200 °C and 250 °C, wherein said enhancement should be preferably achieved without post-curing. In addition, the long-term temperature resistance should be improved, and the emission of volatile compounds should be prevented or at least significantly reduced.

In addition, the provided compositions should be easily and haze-free soluble in reactive diluents to form transparent solutions of the corresponding resins and transparent cured products obtained from said resins. In addition, the corresponding materials should be easy to prepare, preferably at low costs and with established industrial procedures and equipment.

## Summary

The present invention has unexpectedly solved the above objectives by a new combination of components for a new unsaturated polyesteretheramide, as well as their use for the preparation of a corresponding resin and a thermoset obtainable from said resin.

Thus, the subject of the present invention is a composition comprising (i) an unsaturated dicarboxylic acid, an ester and / or an anhydride thereof, and (ii) an aliphatic diol, (iii) a dianhydrohexitol, (iv) a cyclo aliphatic diol and / or an aromatic aliphatic diol, and (v) an amide-forming agent.

A further subject of the invention is an unsaturated polyesteretheramide which is obtainable by polycondensation of the composition of the invention.

Further, a subject of the invention is a method for preparing an unsaturated polyesteretheramide comprising the steps of

(a) providing a composition according to any one of claims 1 to 7 and
(b) reacting the composition of step (a) at an elevated temperature.

Further subjects of the invention are an unsaturated polyesteretheramide resin comprising the unsaturated polyesteretheramide of the invention and a reactive diluent. Another subject of the invention is the use of this unsaturated polyesteretheramide resin for SMC-technology (sheet molding composite technology), BMC-technology (bulk molding technology), resin transfer molding (RTM), compression, hot molding, FCS-technology (fiber composite spraying technology), injection molding, vacuum-assisted resin infusion, continuous sheet production, filament winding, rotation molding, lamination, vacuum-pressure-impregnation (VPI-process), casting, bundling, bonding, coating such as gel coating, top coating, spray coating, in-mold coating, knife-coating, spincoating, dipping, dropping, painting, etc., enamel coating (wire painting), filling, fiber-spinning, foaming and pultrusion.

Further, the subject of the invention relates to a thermoset obtainable by curing said resin of the invention.

In addition, the invention is related to a method for preparing a thermoset comprising the steps of

($\alpha$) providing a composition according to the invention and a reactive diluent,
(ß) optionally mixing the mixture of step ($\alpha$) with additives, and
($\gamma$) applying a curing reaction to the mixture of step (ß) by UV-light and / or by elevated temperature and / or by applying high energy radiation and / or by ambient temperature with a peroxide-accelerator-combination.

Moreover, the invention is related to the use of the thermoset according to the invention for the for the production of tanks, polymer concrete, apparatus construction, medical equipment, railroad equipment, oil and gas field equipment, gelcoats, topcoats, protective layers and other coating applications such as spray coating, inmold coating and painting, putties, cast products, porous materials (e.g. foams, membranes etc.), production of fibers, production of tools, electronic devices, flame retardant thermosets, profiles, containers, moldings, polymer parts, long field lamp carrier, oil sinks, sheets/plates, bondings and pipes under provision that the pipes are not cured-in-place pipes (CIPP).

Finally, a subject of the invention is a thermoset comprising a polyesteretheramide showing an excellent temperature resistance of a mass loss of less than 2% when heated to 320 °C, wherein the mass loss is determined by thermogravimetric analyses (TGA).

## Detailed Description of the Invention

The term "unsaturated polyesteretheramide" as used herein refers to a polyesteretheramide containing (an) unsaturated carbon-carbon bond(s) in the polymer chain, which allow(s) a subsequent crosslinking with a monomer or prepolymer.

Generally, an unsaturated polyesteretheramide can be referred to as a compound being prepared by poly condensation of at least (a) an unsaturated dicarboxylic acid component such as maleic acid, fumaric acid, itaconic acid

or their anhydrides, where accessible, (b) a diol component, (c) and ether containing diol component such as a dianhydrohexitol, and (d) an amide-forming agent such as hexamethylene diamine. A polyesteretheramide is characterised by comprising ester-units, ether units and amide-units in the polymer backbone.

An unsaturated polyesteretheramide resin as used herein can be referred to as an unsaturated polyesteretheramide together with a reactive diluent, wherein the reactive diluent dissolves, preferably completely dissolves, said unsaturated polyesteretheramide.

Component (i) of the present composition is an unsaturated dicarboxylic acid, an ester or an anhydride thereof, or a mixture thereof.

An unsaturated dicarboxylic acid refers to a compound containing at least an unsaturated carbon-carbon bond as well as two carboxylic acid groups, preferably an aliphatic dicarboxylic acid.

In a preferred embodiment of the invention the unsaturated dicarboxylic acid comprises 4 to 10 carbon atoms, in particular 4 or 5 carbon atoms.

In a more preferred embodiment of the invention the unsaturated dicarboxylic acid comprises 4 carbon atoms. Examples of unsaturated dicarboxylic acid comprising 4 carbon atoms are (2*Z*)-but-2-enedioic acid (also referred to as maleic acid), maleic anhydride and (2*E*)-but-2-enedioic acid (fumaric acid) or mixtures thereof. Maleic anhydride is preferred. Alternatively, fumaric acid is preferred.

In an alternative, more preferred embodiment of the invention the unsaturated dicarboxylic acid comprises 5 carbon atoms. Examples of unsaturated dicarboxylic acid comprising 5 carbon atoms are 2-methylidenebutanedioic acid (also referred to as itaconic acid), (2*E*)-2-methyl-2-butenedioic acid (mesaconic acid) and (2*Z*)-2-methyl-2 butenedioic acid (citraconic acid). Itaconic acid is preferred.

An unsaturated dicarboxylic acid ester refers to a compound containing at least an unsaturated carbon-carbon bond as well as two carboxylic acid ester groups, preferably a methyl or ethyl ester of the above-mentioned unsaturated dicarboxylic acids.

An unsaturated dicarboxylic acid anhydride refers to a compound containing at least an unsaturated carbon-carbon bond as well as an anhydride group, preferably an anhydride of the above-mentioned unsaturated dicarboxylic acids.

Further, the composition of the invention may comprise dicarboxylic acids, their esters and / or their anhydrides which can be involved in the polycondensation reaction only.

These dicarboxylic acids, their esters and / or their anhydrides include aromatic or cyclic dicarboxylic acids, their esters and / or their anhydrides such as phthalic acid, isophthalic acid, terephthalic acid, 2,6- naphthalene dicarboxylic acid, tetrahydrophthalic acid, methyl tetrahydrophthalic acid, methylene tetrahydrophthalic acid, 1,2-cyclohexanedicarboxylic acid, 1,4-cyclohexanedicarboxlic acid, dimethyl terephthalate, dimethyl 2,6-naphthalene carboxylate, dimethyl 1,4 cyclohexane carboxylate, tetrahydrophthalic anhydride, methyl tetrahydrophthalic anhydride, methylene tetrahydrophthalic anhydride and 1,2-cyclohexane dicarboxylic anhydride.

Alternatively, these dicarboxylic acids, their esters and / or their anhydrides include saturated aliphatic dicarboxylic acids such as succinic acid, gluteric acid, adipic acid, sebacic acid.

Further, the composition of the invention may further contain a tricarboxylic acid, tetracarboxylic acid and/or the corresponding anhydride. Examples are trimellitic acid, trimellitic anhydride, trimesic acid, 1,2,3-benzenetricarboxylic acid (hemimelitic acid), pyromellitic acid, pyromellitic acid dianhydride, benzophenone tetracarboxylic acid and benzophenone tetracarboxylic acid dianhydride or mixture thereof.

Within the meaning of the invention dicarboxylic acid and anhydride and esters can also be mixtures of various dicarboxylic acids and anhydrides and esters.

In a preferred embodiment of the invention the composition comprises unsaturated dicarboxylic acid, an ester or an anhydride thereof (i) in an amount of 45 to 55 mol%, preferably 47 to 53 mol%, in particular 49 to 51 mol% based on the total molar amount of components (i) to (v).

Component (ii) of the present composition is an aliphatic diol. An aliphatic diol is referred to as aliphatic residue having two hydroxy groups. An aliphatic residue is a non-aromatic, non-cyclic residue substantially comprising a skeleton of carbon and hydrogen atoms, wherein the carbon atoms can be arranged in a branched or straight manner. Further, a carbon atom of the chain and not being connected to the hydroxy group can be substituted by a -O-, -S- or -($NR_A$); wherein $R_A$ is an alkyl with 1 to 4 carbon atoms- such that an ether, thioether or a tertiary amine is formed.

In a preferred embodiment the aliphatic diol (ii) has a molecular weight of 60 g/mol to 400 g/mol, preferably 75 g/mol to 350 g/mol, more preferably 90 g/mol to 300 g/mol, in particular 100 to 250 g/mol.

Examples of the aliphatic diol (ii) are ethane-1,2-diol (glycol), propane-1,2-diol (propylene glycol), propane-1,3-diol, butane-1,4-diol, *Z*-2-butene-1,4-diol, 2-methyl-propane-1,3-diol, pentane-1,5-diol, hexane-1,6-diol, 3-methyl-pentane-1,5-diol, 2-(2-hydroxyethoxy)ethane-1-ol (diethylene glycol or DEG), mixture of 4-oxa-2,6-heptanediol, 2-(2-hydroxy-propoxy)-propane-1-ol and 2-(2-hydroxy-1-methyl-ethoxy)-propane-1-ol (dipropylene glycol or DPG), 3-(3-hydroxy-propoxy)propane-1-ol, 2,2-dimethylpropane-1,3-diol (neopentyl glycol or NPG), 2-ethyl-2-methyl-propane-1,3-diol, 2-butyl-2-ethyl-propane-1,3 diol, 3-hydroxy-2,2-dimethylpropyl-3-hydroxy-2,2-dimethylpropionat (hydroxypivalic acid

neopentyl glycol ester), 2,2-diethyl-propane-1,3-diol, 2-methyl-2-propyl-propane-1,3-diol, 2-methyl-2-isopropyl-propane-1,3-diol, 2-ethyl-2-propyl-propane-1,3-diol, 2,2-dipropyl-propane-1,3-diol.

Preferred are ethane-1,2-diol, propane-1,2-diol, propane-1,3-diol, butane-1,4- diol, Z-2-butene-1,4 diol, 2-methyl-propane-1,3-diol, 2-(2-hydroxyethoxy)ethane-1-ol, 2,2-dimethylpropane-1,3-diol, 2-ethyl-2-methyl-propane-1,3-diol, 2,2-diethyl-propane-1,3-diol, pentane-1,5-diol, 3-methyl-pentane-1,5-diol, mixture of 4-oxa-2,6-heptanediol, 2-(2-hydroxy-propoxy)-propane-1-ol, and 2-(2-hydroxy-1-methyl-ethoxy)-propane-1-ol (dipropylene glycol or DPG), 2-methyl-2-propyl-propane-1,3-diol, 2-methyl-2-isopropyl-propane-1,3-diol, 2-ethyl-2-propyl-propane-1,3-diol, 2,2-dipropyl-propane-1,3-diol, 2-butyl-2-ethyl-propane-1,3-diol, 3-hydroxy-2,2-dimethylpropyl-3-hydroxy-2,2-dimethylpropionat.

More preferred are ethane-1,2-diol, propane-1,2-diol, propane-1,3-diol, butane-1,4-diol, *Z*-2-butene-1,4-diol, 2-methy1-propane-1,3-diol, 2-(2-hydroxyethoxy)ethane-1-ol (diethylene glycol or DEG), pentane-1,5-diol, 3-methyl-pentane-1,5-diol, mixture of 4-oxa-2,6-heptanediol, 2-(2-hydroxy-propoxy)-propane-1-ol, and 2-(2-hydroxy-1-methyl-ethoxy)-propane-1-ol (dipropylene glycol or DPG), 2,2-dimethylpropane-1,3-diol (neopentyl glycol or NPG), 2-ethyl-2-methyl-propane-1,3-diol, 2-butyl-2-ethyl-propane-1,3 diol, in particular 2,2-dimethylpropane-1,3-diol.

In a preferred embodiment of the invention the composition comprises aliphatic diol (ii) in a molar ratio of 0.1 to 0.7, preferably 0.2 to 0.6, in particular 0.25 to 0.50 based on the total molar amount of components (ii) to (v).

Component (iii) of the present composition is a dianhydrohexitol (hexahydrofuro[3,2-*b*]furan-3,6-diol). A dianhydrohexitol is a compound which comprises a cyclic ether group as well as two hydroxy groups. A cyclic ether group is referred to as a group having a residue of the formula $C^1$-O-$C^2$, wherein $C^1$ and $C^2$ are carbon atoms which are connected, optionally via further atom(s), preferably carbon atom(s), to form a cyclic residue.

In a preferred embodiment dianhydrohexitol (iii) is a 1,4:3,6-dianhydrohexitol (hexahydro-furo[3,2-*b*]furan-3,6-diol). Examples of 1,4:3,6-dianhydrohexitols are 1,4:3,6-dianhydro-D-sorbitol (also referred to isosorbide or "ISOS"), 1,4:3,6-dianhydro-D-mannitol (also referred to as isomannide or "ISOM") and 1,4:3,6-dianhydro-D-iditol (also referred to as isoidide or "ISOD"). Preferred is 1,4:3,6-dianhydro-D-sorbitol, which is represented by the following formula

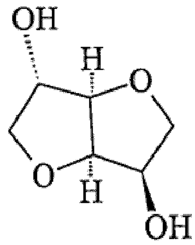

1,4:3,6-dianhydro-D-sorbitol

In a preferred embodiment of the invention the composition comprises dianhydrohexitol (iii) in a molar ratio of 0.05 to 0.55, preferably 0.10 to 0.50, in particular 0.15 to 0.40 based on the total molar amount of components (ii) to (v).

Component (iv) of the present composition is a cycloaliphatic diol or an aromatic aliphatic diol or a mixture of both.

A cyclic aliphatic diol is a compound which comprises a non-aromatic cyclic system consisting of carbon atoms and comprising two hydroxy groups.

In a preferred embodiment the cycloaliphatic diol is a primary cycloaliphatic diol. Examples are cyclohexane dimethanols (also referred to as CHDM) such as 1,2 cyclohexane dimethanol, 1,3-cyclohexane dimethanol, 1,4-cyclohexane dimethanol, byclic diols such as bicycloheptane dimethanol (e.g. bicyclo[2.2.1]heptane-2,2-dimethanol, bicyclo[2.2.1]heptane-2,3-dimethanol, bicyclo[2.2.1]heptane-2,5-dimethanol or bicyclo[2.2.1]heptane-2,6-dimethanol), 1,1-dimethylolcyclopentane, 1,1-dimethylolcyclohexane, 1,1-dimethylolcyclooct-4-ene, 1,1-dimethylcyclo-octane, 1,1-dimethylolcyclododecane, 2-cyclohexyl-2-methyl-propane-1,3-diol, 2,2-dicyclohexyl-propane-1,3-diol and tricyclic diols such as tricyclodecane dimethanol (also referred to as TCD-DM). Preferred are tricyclodecane dimethanol and cyclohexane dimethanol. More preferred are 1,3-cyclohexane dimethanol, 1,4-cyclohexane dimethanol and a mixture thereof. Particularly preferred is a mixture of 1,3-cyclohexane dimethanol and 1,4-cyclohexane dimethanol. Alternatively, particularly preferred is 1,4-cyclohexane dimethanol.

In an alternatively preferred embodiment the cycloaliphatic diol is a secondary cycloaliphatic diol. Examples are cyclobutanediols such as 2,2,4,4-tetramethyl-1,3-cyclobutanediol, cyclohexanediols such as cyclohexane-1,2-diol, cyclohexane-1,3-diol and cyclohexane-1,4-diol, as well as hydrogenated bisphenols such as 4,4'-isopropylidenedicyclohexanol (also referred to as perhydrobisphenol A or PHBPA). Preferred is 4,4'-isopropylidenedicyclohexanol. Alternatively preferred is 2,2,4,4-tetramethyl-1,3-cyclobutanediol.

An aromatic aliphatic diol is an aromatic compound which is substituted with an aliphatic residue comprising two hydroxy groups. Examples are N,N-bis(2-hydroxyethyl)aniline, N,N-bis(2-hydroxyethyl)-tolidine, N,N-bis(2-hydroxypropyl)aniline, N,N-bis(2-hydroxypropyl)toluidine, benzenedimethanol (also referred to as BDM) such as 1,3-benzenemethanol and 1,4-benzenedimethanol or benzenepropanediol such as 2-methyl-2-phenyl-propane-1,3-diol (also known as MPPD), 2,2-diphenyl-propane-1,3-diol, 2-methyl-2-(1-naphthalenyl)-propane-1,3-diol and 2-methyl-2-(2-naphthalenyl)-propane-1,3-diol, 2,2-bis(phenylmethyl)-propane-1,3-diol. More preferred is 2-methyl-2-phenyl-propane-1,3-diol.

In a preferred embodiment of the invention the composition comprises a cycloaliphatic diol or an aromatic aliphatic diol (iv) in a molar ratio of 0.02 to 0.55, preferably 0.08 to 0.50, in particular 0.10 to 0.4 based on the total molar amount of components (ii) to (v).

Further, the composition of the invention may further contain a trifunctional or tetrafunctional alcohol, i.e. a compound comprising three or four hydroxy groups, respectively. Examples are 1,1,1-trimehylol-propane, glycerol, 1,1,1,1-tetramethylolmethane (also referred to as 2,2-bis-(hydroxymethyl)-propane-1,3-diol).

Component (v) of the present composition is an amide-forming agent. An amide-forming agent is a compound which is able to form an amide when reacted with a carboxylic acid, carboxylic acid ester or the anhydride, for example one acid group or the anhydride group of the unsaturated carboxylic acid component (i) as described above.

In a preferred embodiment the amide-forming agent is an amine. Preferably, the amine has a molecular weight of 50 g/mol to 450 g/mol, preferably 75 g/mol to 350 g/mol, more preferably 80 g/mol to 300 g/mol, in particular 85 g/mol to 250 g/mol.

In a preferred embodiment the amine is an aliphatic aminoalcohol. Examples are 4-aminobutanol, 5-aminopentanol, 6-aminohexanol or 2-(2-aminoethoxy)ethanol (also known as diglycolamine or ADEG).

In an alternatively preferred embodiment the amine is a diamine, preferably a diamine selected from 1,4-diaminobutane, 1,5-diaminopentane, 2-methyl-1,5-diaminopentane, 1,6-diaminhexane, 2,2,4-trimethylhexane-1,6-diamine, 2,4,4-trimethyl-hexane-1,6-diamine, 2-(2-aminoethoxy)ethylamine (diamino glycol), 1,2-diaminomethyl cyclohexane, 1,3-diaminomethyl cyclohexane, 1,4-diaminomethyl cyclohexane, 1,3-diamino-2-methylcyclohexane, 1,3-diamino-4-methylcyclohexane, 4-(2-aminopropan-2-yl)-1-methylcyclohexanamine (1,8-diaminomenthane), 3-aminomethyl-3,5,5-trimethyl-cyclohexylamin (isophorondiamin or IPDA), bicyclo[2.2.1]heptane-2,3-diyldimethan-amine, bicyclo[2.2.1]heptane-2,5-diyldimethanamine, bicyclo[2.2.1]heptane-2,6-diyldi-methanamine, tricyclodecanedimethylamine (also referred to as TCD-DA), 4,4'-methylenebis(cyclohexylamine) (also referred to as 4,4'-diaminocyclohexylmethane or Dicykan), 4,4'-diamino-3,3'-dimethylcyclohexylmethane (dimethyldicykan), 1,3-bis(aminomethyl)benzene, 1,4-bis(aminomethyl)benzene and 6-phenyl-1,3,5-triazin-2,4-diamine (benzoguanamine), in particular 3-aminomethyl-3,5,5-trimethylcyclohexylamin (isophorondiamin).

In a preferred embodiment the amide-forming agent is an isocyanate, preferably a diisocyanate. At an elevated temperature of 100 to 200°C and in the presence of a carboxylic acid the isocyanate group(s) can be transferred to amino group(s) via several intermediates, which in turn can form an amide group with the carboxylic group of component (i). Examples of diisocyanates are diphenylmethane diisocyanates such as 2,2'-diphenylmethanediisocyanat (2,2'-MDI), 2,4'-diphenylmethanediisocyanat (2,4'-MDI), 4,4'-diphenylmethanediisocyanat (4,4'-MDI), MDI-products with NCO-functionality > 2 (Polymer-MDI); toluene diisocyanates such as toluene 2,4-diisocyanat (2,4-TDI) and toluene 2,6-diisocyanat (2,6-TDI); 1,4-phenylene-diisocyanate, 1,3-bis-(1-isocyanato-1-methyl-ethyl)benzene (TMXDI), 1,5-naphthylenediisocyanate, 1,6-diisocyanatohexane (hexamethylene diisocyanate or HDI), 1,6-diisocyanato-2,2,4-trimethyl-hexane (2,2,4-trimethyl-hexamethylendiisocyanate), 5-isocyanato-1-(isocyanatomethyl)-1,3,3-trimethylcyclohexane (isophoronediisocyanate or IPDI), and 1,1'-methylene-bis(4-isocyanatocyclohexane). Preferred are 2,2'-diphenylmethanediisocyanat (2,2'-MDI), 2,4'-diphenylmethanediisocyanat (2,4'-MDI), 4,4'-diphenylmethanediisocyanat (4,4'-MDI), MDI-products with NCO-functionality > 2 (Polymer-MDI), toluene diisocyanates such as toluene 2,4-diisocyanat (2,4-TDI) and toluene 2,6-diisocyanat (2,6-TDI), 1,6 hexamethylene diisocyanate and isophoronediisocyanate, in particular isophoronediisocyanate.

In a preferred embodiment of the invention the composition comprises amide-forming agent (v) in a molar ratio of 0.02 to 0.40, preferably 0.04 to 0.30, in particular 0.05 to 0.2 based on the total molar amount of components (ii) to (v).

In another preferred embodiment the composition comprises component (i) to the total amount of components (ii) to (v) in a molar ratio of 0.9 : 1.1 to 1.1 : 0.9, more preferably of 0.95 : 1.05 to 1.05 : 0.95, in particular in a molar ration of 0.98 : 1.02 to 1.02 : 0.98, especially of about 1:1.

In a preferred embodiment the present composition comprises

(i) 45 to 55 mol%, preferably 47 to 53 mol%, in particular 50 mol% of unsaturated dicarboxylic acid, an ester or an anhydride thereof;
(ii) 4 to 39 mol%, preferably 9.0 to 33 mol%, in particular 11 to 28 mol% of aliphatic diol;
(iii) 2 to 31 mol%, preferably 4 to 28 mol%, in particular 7 to 22.0 mol% of dianhydrohexitol;
(iv) 2 to 31 mol%, preferably 3 to 28 mol%, in particular 4 to 22 mol% of cycloaliphatic diol or an aromatic aliphatic diol and
(v) 1 to 22 mol%, preferably 2 to 17 mol%, in particular 3 to 11 mol% of amide-forming agent.

The composition of the present invention may comprise further additives such as inhibitors and/or esterification

catalysts.

An inhibitor is referred to as a compound which is a radical scavenger or which generates a radical scavenger via a one-stage or a multi-stage reaction mechanism. Examples of inhibitors are hydroquinone, 2-methylhydroquinone, 2-tert.butyl-hydroquinone, p-benzoquinone, 2-methyl-p-benzoquinone, 2-tert.-butyl-p-benzoquinone, 1,4-naphthoquinone, 4-tert.-butyl-catechine (TBC), 1,2-dihydroxynaphthalene, 1,4-dihydroxynaphthalene, N-nitroso-N-phenylhydroxylamine ammonium salt and tris(N-nitroso-N-phenylhydroxyl-aminato)aluminium. The composition preferably comprises inhibitor in an amount of 50 to 1000 ppm, preferably 200 to 700 ppm based on the total weight of the composition.

An esterification catalyst is a compound that causes a chemical esterification as well as an amidation reaction to happen faster and to achieve higher condensation degrees in shorter time. Esterification catalysts can be an alkaline or acidic compound. An example of an acidic esterification catalyst is butyl stannoic acid (also referred to as FASCAT® 4100).

The composition comprises esterification catalyst in an amount of 100 to 1000 ppm based on the total weight of the composition.

In a particularly preferred embodiment the present composition does not comprise an esterification catalyst.

Another subject of the invention is an unsaturated polyesteretheramide obtainable by condensation reaction of the composition of the invention. A condensation reaction is an organic addition reaction that proceeds in a step-wise fashion to produce the addition product and a small molecule, usually water or an alcohol like methanol.

In a preferred embodiment the condensation reaction comprises a preceding reaction, for example an addition or a condensation, sub-step of compound (i) and one to three of components (ii) to (v) in the corresponding amounts. In case that the sub-step is carried out, compound (i) is preferably subjected to an addition or condensation reaction with component (iii) or (iv), in particular compound (iv).

Such a sub-step can be regarded as a "prepolymer"-forming step. Subsequent to the above-described preceding sub-step, the corresponding condensation step of sub-product ("prepolymer") and the remaining component(s) can be carried out.

It turned out that such a preceding reaction sub-step can prevent the dehydration/deamination of a compound (ii) to (v) in the subsequent condensation of the corresponding composition and/or enhances the styrene compatibility.

In a preferred embodiment, if component (ii) and/or component (iv) have hydroxy (OH)-functionality prone to dehydratation (e.g. 1,4-cyclohexanediol or 2,2,4,4-tetramethyl-cyclobtane-1,4-diol), said components are reacted with two molar parts of maleic anhydride in reaction on sub-step at temperatures between 80 °C and 130 °C for an hour.

In an alternative embodiment, if dicyclopentadiene (DCPD) is used as an end-group modifier, one molar part of a diol mixture comprising one or more diols from component (ii), (iii) or (iv) can preferably be brought to reaction with two molar parts of maleic anhydride at a temperature of 80 °C to 130 °C for one hour. One molar part of the resulting product is then reacted with 0.05 to 1.0 molar parts dicyclopentadiene at 120 °C to 150 °C for 5 hours.

In a preferred embodiment additional 1% to 20% of an unsaturated dicarboxylic anhydride, especially maleic anhydride, related to total amount of the unsaturated dicarboxylic acids in the composition, are added after the polycondensation process.

Further, within the condensation, the amide forming agent may react with two acid or ester groups or the anhydride group of the unsaturated carboxylic acid (component (i)) such that an imide can be formed. Thus, the unsaturated polyesteretheramide of the present invention may comprise imide groups.

Further, in case that the obtained condensation product comprises unsaturated double bonds in the *Z*-configuration, for example when the corresponding unsaturated dicarboxylic acid (component (i)) such as maleic acid and or maleic anhydride was used, the condensation can preferably be carried out in the presence of at least one isomerization catalyst converting unsaturated double bonds in the *Z*-configuration to unsaturated double bonds in the *E*-configuration. The corresponding isomerization catalysts are known in the art; preferred are morpholine and /or 2,6-dimethlymopholine, which subsequently can be preferably removed completely or partially from the melt by distillation. The isomerization catalyst can preferably be used at 160 °C to 200 °C in an amount of preferably 1500 to 10000 ppm based on the total amount of the composition.

The isomerization step can lead to a condensation product having an amount of unsaturated double bonds in *E*-configuration of more than 80%, preferably of more than 90%, in particular of more than 95% of the total amount of unsaturated double bonds.

It turned outthat curing of the unsaturated polyesteretheramide resin comprising more than 80%, preferably of more than 90%, in particular of more than 95% of double bonds in the *E*-configuration based on the total amount of unsaturated double bonds in the unsaturated polyesteramide leads to a thermoset with an enhanced glass transition temperature compared to the unsaturated polyesteretheramide resin comprising the less than 80% of double bounds in the *Z*-configuration.

It is preferred to conduct the condensation reaction in a reaction vessel under a protective gas such as nitrogen. Alternatively, the condensation reaction can preferably be conducted under vacuo.

The condensation reaction can preferably be conducted in the presence of a solvent. Suitable solvents are

solvents being poorly or not miscible with water, such benzene, toluene, xylene, cyclohexane and chlorinated solvents like dichloromethane, trichloromethane or tetrachloromethane. In a more preferred embodiment the condensation reaction is carried out in the absence of a solvent.

The condensation reaction can preferably be carried out in the presence of an esterification catalyst. An example of an acidic esterification catalyst is described above, namely butyl stannoic acid (also referred to as FASCAT® 4100).

Alternatively preferred the condensation reaction can be carried out in the absence of an esterification catalyst.

The condensation reaction can preferably be conducted under mechanical treatment. Mechanical treatment can be for example carried out by stirrers known in the art such as anchor stirrer, paddle stirrer, ribbon blade, turbine vortex stirrer, propeller stirrer and gatter stirrer.

It is preferred that the condensation reaction is conducted under stirring, preferably under stirring of 20 to 1000 rpm. When using a one-arm paddle stirrer the condensation reaction is preferably conducted under stirring from 50 to 500 rpm.

The duration of the condensation reaction is preferably from 4 to 24 hours, preferably from 5 to 20 hours, in particular from 6 to 18 hours. It is further preferred that the temperature being at its peak is maintained for at least one hour at this peak temperature.

Further, the condensation reaction is carried out under elevated temperature. An elevated temperature is regarded as a temperature being higher than 23 °C (room temperature). In a preferred embodiment the condensation reaction is carried out at a temperature between 80 °C and 220 °C, preferably between 80 °C and 210 °C. It is further preferred that the reaction temperature is raised stepwise, for example 10 °C per hour, from 140 °C to 170 °C. Slow temperature increase is advisable above 170 °C, heating rates of 3 °C/10 min and less are preferred.

Further, after the reaction at 210 °C, the obtained polyesteretheramide is cooled under stirring, for example to 160 °C to 190 °C, and transferred from the reaction vessel to a storage vessel and cooled to 23 °C (room temperature). After being cooled the solid product can be crushed for further processing.

In a preferred embodiment the number average molar mass $M_n$ of the obtained unsaturated polyesteretheramide is from 800 to 6000 g/mol, more preferred from 1000 to 5000 g/mol and even more preferred 1200 to 4500 g/mol.

In a preferred embodiment the mass average molar mass $M_w$ of the obtained unsaturated polyesteretheramide is from 2400 to 18000 g/mol, more preferred from 3000 to 15000 g/mol and even more preferred 3600 to 13500 g/mol.

In a preferred embodiment the peak molar mass $M_p$ of the obtained unsaturated polyesteretheramide is from 1500 to 17000 g/mol, more preferred from 2000 to 14000 g/mol, and even more preferred 2400 to 12000 g/mol.

The number average molar mass $M_n$, the mass average molar mass $M_w$ and the peak molar mass $M_p$ are determined as described in the experimental section.

Another subject of the invention is a method for preparing an unsaturated polyesteretheramide comprising the steps of

(a) providing a composition according to the invention; and
(b) reacting the composition of step (a) at an elevated temperature.

In step (a) the components (i) to (v) are transferred to a reaction vessel. As far as the components and/or the composition are concerned, it applies the same as described above.

In a preferred embodiment step (a) can comprise a sub-step in which precedingly a prepolymer as described above can be obtained.

Preferably, step (b) is conducted under an inert gas, in particular nitrogen, in order to prevent oxidation and early gelation by hydroperoxides. Alternatively preferably, step (b) is conducted under reduced pressure such as a pressure of 10 to 600 mbar.

It is preferred that in step (a) an inhibitor is added to prevent early gelation by thermal radicals formed in step (b).

In a preferred embodiment, an esterification catalyst can be added in step (a) to the components (i) to (v). As far as these components are concerned it applies the same as described above. In a further preferred embodiment, no esterification catalyst is added to components (i) to (v).

Optionally, in step (a) a solvent (entrainer) is added to the composition of the invention to improve water removal. As far as the solvent is concerned, it applies the same as described above. Preferably the method of the invention is carried out in the absence of a solvent.

In a preferred embodiment step (a) includes a mechanical treatment. It is preferred that the composition is stirred, preferably stirred at 20 to 1000 rpm.

Further, step (b) is reacting the composition of step (a) at an elevated temperature. An elevated temperature is regarded as a temperature being higher than 23 °C (room temperature). In a preferred embodiment the condensation reaction is carried out at a temperature between 80 °C and 220 °C, preferably between 80 °C and 210 °C. It is further preferred that the reaction temperature is raised stepwise, for example 10 °C per hour, from 140 °C to 170 °C. Slow temperature increase is advisable above 170°C, heating rates of 3 °C/10 min and less are preferred.

Step (b) can preferably be conducted under mechanical treatment. It is preferred that step (b) is conducted under stirring, preferably under stirring at 50 to 1000 ppm, more preferably at about 400 rpm.

The duration of step (b) is preferably from 4 to 24 hours, preferably from 5 to 20 hours, in particular from 6 to 18 hours. It is further preferred that the temperature being at its peak is maintained for at least one hour at this peak temperature.

The method of the present invention optionally comprises step (c) of isolating the unsaturated polyester amide. Step (c) includes cooling the obtained reaction product, preferably to a temperature to about 160 °C to 190 °C and transferring the obtained product, preferably without further purification, to a storage device. Further, step (c) preferably includes cooling, preferably cooling to (23 °C), the obtained product and subsequently further processing the cooled product, preferably by crushing it into pieces.

In an alternative embodiment the product from step (b) is cooled to a temperature of 100 °C to 160 °C and, without further isolation or purification steps, the melt of the product from step (b) is dissolved in reactive diluent, preferably styrene, warmed to a temperature of 50 °C to 80 °C under intensive stirring.

Further the present invention relates to an unsaturated polyesteretheramide resin comprising the unsaturated polyesteretheramide and a reactive diluent. Suitable reactive diluents for unsaturated polyester as well as unsaturated polyesteretheramide are known in the art. Generally, a compound being suitable as reactive diluent can on the one hand dissolve, preferably completely dissolve, the polyester or polyesteretheramide and on the other hand contain a polymerizable group, such as an unsaturated carbon-carbon bond. Examples of reactive diluents are styrene, vinyltoluene, tert.-butylstyrene, alpha-methyl-styrene, divinylbenzene, 2-vinylpyridine, 3-vinylpyridne 4-vinylpyridine, tris-allyl-isocyanurate, tris-allyl-cyanurate, tris-allyl-mellitate, diallylphthalate, diallylisophthalate, diallylterephthalate, methylmethacrylate, tert.-butylmethacrylate, cyclohexylmethacrylate, functional methacrylates, tert butylacrylate, functional acrylates, dimethylitaconate maleic anhydride, itaconic acid and itaconic anhydride, 1,2,4-trivinylcyclohexane, most preferably styrene.

In view of the polymerizable group in the reactive diluent and the presence of the unsaturated carbon-carbon bond(s) in the unsaturated polyesteretheramide obtained after the polycondensation, a crosslinking, preferably the radical crosslinking, of the unsaturated polyesteretheramide with the reactive diluent is enabled.

The ratio of unsaturated carbon-carbon bonds in the unsaturated polyesteretheramide to the polymerizable groups, in particular unsaturated carbon-carbon bond, in the reactive diluent is not limited in the present invention to unsaturated polyesteretheramide resin. In a preferred embodiment, for each double bond in the unsaturated polyesteretheramide there are 0.5 to 8, preferably 0.7 to 7, more preferably 1 to 6, even more preferably 1.5 to 4, especially preferably 1.8 to 3.5 reactive diluent molecules, preferably styrene molecules, present in the composition. If the number is lower, the composition may be too viscous or it may lead to insufficient cross-linking. If the number is higher, the viscosity of the composition may be too low or styrene derivative molecules may not react until the completion in the cross-linking reaction and free residual monomer may diffuse out of the product or out of the surface.

In a preferred embodiment the unsaturated polyesteretheramide resin contains styrene and polyesteretheramide in a weight ratio from 1: 3 to 3 to 1, preferably 1 to 2 to 2 to 1, in particular from 1 to 1.5 to 1.5 to 1.

In an alternatively preferred embodiment the unsaturated polyesteretheramide resin contains reactive diluent in an amount of 20 to 60 wt.%, preferably 30 to 50 wt.% based on the total weight of unsaturated polyesteretheramide and reactive diluent.

It turned out that the present unsaturated polyesteretheramide resin was a transparent solution, i.e. the reactive diluent dissolves the unsaturated polyesteretheramide such that there is no precipitate after visual inspection.

The polyesteretheramide resin preferably contains at least 20 wt%, particularly preferably at least 25 wt%, and very particularly preferably at least 30 wt% of a mixture of unsaturated polyesteretheramide and reactive diluent. In addition, the polyesteretheramide resin may, for example, comprise other additives such as commercially available UP-resins, Vinylester-resins (VE-resins), Vinylesterurethane-resins (VEU-resins), inhibitors, light stabilizers, curing agents, pigments and dyes, flame retardants, thickening agents, thermoplastic shrink control agents, biocides, waxes and other film forming agents, lubricants, mold release agents, toughening agents, wetting agents, deaeration agents, coupling agents, fibers and/or fillers.

The inhibitor may be the same or different to the inhibitor as described above.

Light stabilizers are a group of additives that have been developed to prevent or at least significantly reduce the damage to polymers caused by exposure to the environmental parameters of light. Examples of light stabilizers are compounds referred to as HALS (hindered-amine light stabilizers) or as UV-absorbers.

Pigment and dyes are materials that change the color of reflected or transmitted light as the result of wavelength-selective absorption. An example of a pigment is titanium dioxide.

Fillers are inert compounds enhancing the volume of the unsaturated polyesteretheramide resin. For every 100 parts by weight of a mixture of unsaturated polyesteretheramide and reactive diluent, there are preferably 20 to 280 parts by weight fillers present in the unsaturated polyesteretheramide resin. An example of a filler is calcium carbonate.

Thickening agents are increasing the viscosity of the unsaturated polyesteretheramide-resin strongly and reducing its tackiness. By this the thickened unsaturated polyesteretheramide-resin can be handled more easily. Examples of thickening agents are isocyanates such as 4,4'-methylene-diphenyl-diisocyanate, magnesium oxide (MgO), Calcium-hydroxide ($Ca(OH)_2$) and Calciumoxide (CaO).

Fibers enhance the mechanical properties and mechanical stability of the unsaturated polyesteretheramide thermoset. For every 100 parts by weight of a mixture of unsaturated polyesteretheramide and reactive diluent, there are preferably 10 to 200 parts by weight glass fibers, carbon fibers, aramid fibers, basalt fibers, natural fibers. They are applied as textile wovens and / or textile nonwovens and / or chopped fibers and / or mats out of chopped and or non-chopped fibers and / or fleece in the unsaturated polyesteretheramide resin and / or compound.

Flame retardants are substances which are intended to prevent or slow the further development of ignition. Often used examples are solid flame retardants like alumina trihydrate (ATH), magnesium hydroxide ($Mg(OH)_2$) and ammonium polyphosphate (APP). Other suitable flame retardants are triphenylphosphate, resorcinol tetraphenyldiphosphate and bisphenol A tetraphenyldiphosphate. Decabromdiphenylethane, ethylene-bis-(tetrabromophthalimide), tris(tribromophenyl)cyanurate or dodecachloropentacyclo-octadecadiene (Dechlorane Plus®) or combination. Further, halogenated flame retardants may be used be used in combination with synergists like antimony trioxide ($Sb_2O_3$) or 2,3-dimethyl-2,3-diphenyl-butane (Dicumene®).

A biocide can be referred to as a substance which destroys, deters, renders harmless, or exerts a controlling effect on any harmful organism by chemical or biological means. Examples of biocides are substances based on silver, copper or zinc which are supplied as salts (zinc pyrithione) or oxides or by loaded zeolites or by nano particles. Further examples of biocides are chitosan, 10,10'-oxybisdphenoxarsine (OBPA), isothiazolinones, 2,4,4'-trichlor-2'-hydroxy-diphenylether (Trichlosan), N-(fluorodichloro-methylthio) phthalimide, thiabendazole (TBZ) or methylthio-cyclopropylamino-tert-butylamino-sym-triazine and synthetic polymers poly(tert-butylaminoethylmethacrylate), poly(tert-butylaminomethylstyrene) and their active copolymers.

Thermoplastic shrink control agents are substances that can be used in sheet molding compound (SMC) and in bulk molding compound (BMC) technology in order to compensate for shrink by forming micro voids in the thermoplastic phase during cure. Examples are solid polymers such as powdered polyethylene and liquid solutions in styrene made from thermoplastic polymers such as polystyrene and styrene copolymers, polymethylmethacrylate (PMMA), polyvinylacetate (PVAc) and functionalized PVAc, saturated (non-curable) polyesters and rubbers.

Toughening agents are used to improve the damage tolerance of the thermoset material. In particular, the elongation at break and the impact strength can be enhanced, while crack formation under long term static load and dynamic load can be reduced. The following class of compounds may be used as toughening agents: rubbers, nanoparticles, i.e. fillers having an average diameter of less than 1 $\mu$m or precursors forming such nanoparticles, thermoplastic polymers and blockcopolymers. Toughening agents may be added to the resin before curing in an amount of 2 to 40 wt.%, preferably 3 to 30 wt.%, more preferably 5 to 25 wt.% of the curable resin.

Examples for rubbers are acrylonitrile-butadiene-rubber (NBR), hydrogenated NBR (H-NBR), polychloroprene (CR), styrene-butadiene-rubber (SBR), natural rubber (NR), polyisobutylene (PIB), ethylene-propylene-rubber (EPM), ethylene-propylene-diene-rubber (EPDM) and rubbers based on polyacrylates, acrylate-rubber (AM) and fluororubber and functionalized rubber like carboxy-terminated NBR (CTBN) or epoxy-terminated NBR (ETBN).

Examples for nanoparticles are soot, carbon black (high abrasion furnace, super high abrasion furnace), pyrogenic silicic acid, surface-modified pyrogenic silicic acid, fumed silica, precipitated silica, rigid phase material from polyurethane recycling, modified silica particles by hydrolysis of functionalized silanes, montmorillonite, bentonite and exfoliated montmorillonite.

Examples for thermoplastic polymers are polysulfone (PSU), polyethersulfone (PES), polyphenylenesulfone (PPSU), polyoxy-2,6-dimethyl-1,4-phenylene (PPE), polycarbonate based on bisphenol A and bisphenol TMC (APEC HT®), copolymers of styrene and maleic anhydride, copolymers of styrene and maleic anhydride and N-phenyl-maleinimide (XIRAN®), copolymers from styrene and glycidylmethacrylate, copolymer from styrene and acrylonitrile (SAN), copolymer from styrene, butadiene and acrylonitrile (ABS), copolymer from styrene, acrylate monomer and acrylonitrile (ASA), copolymers from acrylonitrile and $\alpha$-methyl-styrene (AMSAN), amorphous polyamides, polymethacrylimide, polyvinylidenefluoride (PVDF), polyvinylfluoride (PVF), ethylene-tetrafluoroethylene-copolymer (ETFE) and copolymer from tetrafluoroethylene and hexafluoropropylene.

Examples for suitable blockcopolymers are styrene-butadiene-styrene blockcoplymer (SBS), polyetheramide blockcopolymer, thermoplastic polyurethane (TPU) on the basis of polyesters, polyethers and polycarbonates.

The polyesteretheramide resin preferably further comprises a curing agent; the curing agent can preferably be present in an amount of from 0.05 to 4 wt%, preferably from 0.5 to 3.0 wt%.

A curing agent is a substance or a mixture of substances which expedites the curing process.

In case that a curing is conducted at a temperature of between 5 and 45 °C it can be regarded as cold curing. Cold curing can be conducted with two systems of curing agents: 1) Benzoylperoxides plus amine-accelerator and 2) hydroperoxides plus metal-accelerator.

Examples benzoylperoxides of system 1) are dibenzoyl peroxide and 4,4'-dichloro-dibenzoyl peroxide. Examples of amine-accelerator of system 1) are N,N-dimethylaniline, N,N-diethylaniline, N,N-dimethyltolidine, N,N-diethyltolidine, N,N-bis(2-hydroxyethyl)aniline, N,N-bis(2-hydroxyethyl)-tolidine, N,N-bis(2-hydroxypropyl)-aniline, or N,N-bis(2-hydroxypropyl)toluidine.

Examples of hydroperoxides of system 2) are hydrogenperoxide, tert-butylhydroperoxide, tert-amylhydroperoxide, methylethylketone-peroxide, cyclohexanone-peroxide, acetylaceton-peroxide, trimethylcyclohexanon-peroxid, iso-butylmethylketon-peroxide. Examples of metal-accelerator of system 2 are organic salts of Co(II), Mn(II), Cu(I), Cu(II) or Fe(II) such as the corresponding metal salts of ethylhexanoate or naphthenate.

In case that curing is conducted at a temperature of above 45 °C and 120 °C it can be regarded as thermal curing. Thermal curing can be conducted with one or more thermal initiator agents as curing agents. Suitable thermal initiator agents are peroxides, azo-compounds and C-C labile compounds.

Examples of peroxides suitable as thermal initiator are methyl ethyl ketone peroxide, 2,4-pentanedione peroxide, methyl isobutyl ketone peroxide, cyclohexanone peroxide, dibenzoyl peroxide, tert-butyl peroxyneodecanoate, 2,5-dimethyl-2,5-di-(2-ethyl-hexanoylperoxy)hexane, tert-amyl peroxy-2-ethylhexanoate, tert-butyl peroxy-2-ethylhexanoate, tert-butyl peroxy-3,5,5-trimethylhexanoate, tert-butyl peroxy-2-methylbenzoate, tert-butylperoxy 2-ethylhexyl carbonate, tert-butylperoxy isopropyl carbonate, tert-amyl peroxybenzoate, tert-butyl peroxybenzoate, 1,1-di-(tert-amylperoxy) cyclohexane, 1,1-di-(tert-butylperoxy)-3,3,5-trimethyl-cyclohexane, 1,1-di-(tert-butylperoxy)-cyclohexane, 2,2-di-(tert-amylperoxy)butane, n-butyl 4,4-di-(tert-butylperoxy)valerate, dilauroyl peroxide, di-(2-tert-butylperoxyisopropyl)benzene, dicumyl peroxide, 2,5-dimethyl-2,5-di-(tert-butylperoxy)hexane, di-tert-butyl peroxide, di-tert-amyl peroxide, dicumyl peroxide, di(tert-butylperoxyisopropyl)benzene, 2,5-dimethyl-2,5-di(tert-amyl-peroxy)hexane, tert-butyl cumyl peroxide, 2,5-dimethyl-2,5-di(tert-butylperoxy)hexyne-3,3,6,9-triethyl-3,6,9-trimethyl-1,4,7-triperoxonane, di-(4-tert-butylcyclohexyl) peroxydicarbonate, di-(2-ethylhexyl) peroxydicarbonate, tert-butyl hydroperoxide, cumyl hydroperoxide, isopropylcumyl hydroperoxide, 1,1,3,3-tetramethylbutyl hydroperoxide.

Examples of azo-compounds suitable as thermal initiator are 2,2'-azobis(2-isobutyronitrile), 2,2'-azobis(2-methylbutyronitrile), 1,1'-azobis(hexahydrobenzo-nitrile).

Examples of C-C labile compounds suitable as thermal initiator are 2,3-dimethyl-2,3-diphenylbutane, and 3,4-dimethyl-3,4-diphenylhexane.

Curing can be further conducted by curing agents which generate radicals when irradiated with UV-A light, i.e. light of a wavelength of 315 to 380 nm. Such a curing agent can be also referred to as a photo-initiator. A variety of photo-initiators are known to the skilled person. Examples are derivatives of benzoin, benzil, $\alpha$-hydroxyketone, $\alpha$-amino ketone, acylphosphine oxide, bisacylphosphine oxide or combination thereof.

The curing agent may also be a mixture of different curing agents.

In an alternatively preferred embodiment the unsaturated polyesteretheramide resin does not comprise a curing agent.

Another subject of the invention is the use of the unsaturated polyesteretheramide resin according to the invention for SMC-technology (sheet molding composite technology), BMC-technology (bulk molding technology), resin transfer molding (RTM), compression, hot molding, FCS-technology (fiber composite spraying technology), injection molding, vacuum assisted resin infusion, continuous sheet production, filament winding, rotation molding, lamination, vacuum-pressure-impregnation (VPI-process), casting, bundling, bonding, coating such as gel coating, top coating, spray coating, filling, inmold coating, knife-coating, dipping, dropping, painting, etc., wire painting (enamel coating), fiber spinning, foaming and pultrusion.

A further subject of the invention is a thermoset obtainable by curing the unsaturated polyesteretheramide resin of the present invention. A thermoset is referred to a product, that is irreversibly cured from a soft or liquid starting product, in particular from a resin. During curing the unsaturated polyesteretheramide and the reactive diluent are crosslinked via a polymerization process.

In a preferred embodiment curing can be conducted by a radical polymerization started by a curing agent. Suitable curing agents are described above.

Alternatively preferred, curing can be carried out in the absence of a curing agent.

The curing can for example be carried out by means of high-energy radiation. Examples for high-energy radiation suitable for curing are electron radiation, $\alpha$-, ß-, or $\gamma$-radiation, preferably $\gamma$-radiation.

Curing of the unsaturated polyesteretheramide resin is preferably conducted at an elevated temperature, preferably from 120 to 250 °C. Further, the temperature might be raised stepwise during the curing process.

In a preferred embodiment the curing of the unsaturated polyesteretheramide resin is conducted at 120 to 200 °C for 0.5 to 2 hours and afterwards at 200 to 260 °C for 0.5 to 2 hours. In a preferred embodiment an additional curing of the unsaturated polyesteretheramide resin is conducted, for example at 80 to 220 °C for 100 to 1000 hours. Unexpectedly it has been found, that by the additional curing the glass transition temperature of the obtained thermoset is enhanced and the glass transition is gradually sharper (less broad).

In a more preferred embodiment a curing agent as described above is employed such that the time of curing and/or temperature is significantly decreased.

In a preferred embodiment the cured unsaturated polyesteretheramide resin is further subjected to a post-curing process. The duration of the post-curing is preferably 1 to 3 hours. Further, post-curing is carried out at a temperature of 100 to 260 °C, in particular at 120 to 250 °C.

The thermoset obtainable from the unsaturated polyesteretheramide resin of the present invention preferably exhibits a glass transition temperature of 200 to 260 °C. The glass transition temperature is determined as described in the experimental section.

Further the thermoset obtainable from the unsaturated polyesteretheramide resin shows an excellent temperature resistance with a mass loss of less than 2% when heated to 320°C, wherein the mass loss is determined by thermogravimetric analyses (TGA).

The temperature resistance is determined as described in the experimental section.

Further, the emission of volatile compounds from the thermoset of the present invention at a high temperature, preferably a temperature of above 150 °C to 230 °C, is significantly reduced.

Further the invention is related to the use of the thermoset according to the invention. for the production of tanks, polymer concrete, apparatus construction, medical equipment, railroad equipment, oil and gas field equipment, gelcoats, topcoats, protective layers and other coating applications such as spray coating, inmold coating and painting, putties, cast products, porous materials (e.g. foams, membranes etc.), production of fibers, production of tools, electronic devices, flame retardant thermosets, profiles, containers, moldings, polymer parts, long field lamp carrier, oil sinks, sheets/plates, bondings and pipes under provision that the pipes are not cured-in-place pipes (CIPP).

Another subject of the invention is a method for preparing a thermoset comprising the steps of

(α) providing the unsaturated polyesteretheramide resin of the invention, and
(ß) curing the unsaturated polyesteretheramide resin of step (α) at an elevated temperature.

In step (α) the unsaturated resin of the invention is provided. As far as the components of the unsaturated resin are concerned, it applies the same as above mentioned.

In a preferred embodiment the unsaturated polyesteretheramide resin comprises a curing agent as described above.

Step (α) further preferably comprises transferring the unsaturated polyesteretheramide resin or the unsaturated polyesteretheramide compound into the mold for the desired molded part.

Preferably step (α) is carried out under a protection gas, in particular nitrogen.

In step (ß) the unsaturated polyesteretheramide resin of step (α) is cured at an elevated temperature. As far as elevated temperature is concerned, it applies the same as described above. In a preferred embodiment the elevated temperature is from 120 to 260 °C. Further, the temperature might be raised stepwise during step (ß).

In a preferred embodiment step (ß) is conducted as a radical polymerization.

In a preferred embodiment the radical polymerization can be started by a curing agent, in particular a photoinitiator, as described above.

Alternatively, polymerization can preferably be started by high-energy radiation, for example electron radiation, with an energy of 150 to 300 kV accelerator voltage.

In a preferred embodiment step (ß) is conducted for 1 to 5 hours, preferably for 2 to 4 hours. In a more preferred embodiment step (ß) of the unsaturated polyesteretheramide resin is conducted at 120 to 180 °C for 0.5 to 1.5 hours and afterwards at 200 to 260 °C for 0.5 to 1.5 hours.

In a preferred embodiment step (ß) further comprises a post-curing ($ß_p$). The post curing ($ß_p$) is preferably conducted directly after the curing. The post curing ($ß_p$) is preferably carried out a temperature of 220 to 270 °C, in particular at about 250 °C. The duration of the post-curing is preferably 1 to 3 hours.

After the curing or the post curing the obtained thermoset is cooled, preferably to 23 °C and removed from the mold.

Further the present invention relates to a thermoset comprising polyesteretheramide resin having an excellent temperature resistance with a mass loss of less than 2% when heated to 320 °C, wherein the mass loss is determined by thermogravimetric analyses (TGA).

The invention will now be illustrated with reference to the following examples.

## Experimental part

### Analytical determination

### Determination of the acid value

The acid value indicates the specific content of carboxy groups in milligram potassium hydroxide (KOH) per

gram of unsaturated polyesteretheramide or unsaturated polyesteretheramide resin and was measured according to EN ISO 2114:2000, procedure A. Thus, the unit of this value is mgKOH/g. The determination of the acid value results from an acid-base titration with methanolic potassium hydroxide (known concentration); the unsaturated polyesteretheramide (UPEEA) or the unsaturated polyesteretheramide-resin was dissolved in acetone and phenolphthalein was used as indicator.

**Determination of styrene compatibility**

The minimum amount of unsaturated polyesteretheramide is determined, that can be dissolved at 23 °C (room temperature) in a specific amount of styrene. A clear unsaturated polyesteretheramide-resin with known styrene content is titrated with styrene until the resin becomes and stays turbid even after intensive homogenization by stirring or shaking. Then the styrene compatibility is calculated by the following equation:

$$\text{styrene compatibility } [\%] = \frac{Mstyrene}{Mstyrene + \ Mupeea} \times 100$$

wherein

Mupeea is the mass amount of unsaturated polyesteretheramide measured in g, and Mstyrene is the total mass of styrene in the diluted unsaturated polyesteretheramide resin measured in g.

**Determination of viscosity**

The viscosity herein was determined via an ICI cone&plate viscometer (supplied by EIC Epprecht Instruments + Controls AG, Switzerland) with a cone of 19.5 mm and a cone angle of 0.5°, wherein the temperature gradient between cone and plate was ignored. Further, all measurements of viscosity were conducted at 150°C plate temperature.

The scale of the used cone-plate viscometer is divided in 10 parts. At a maximum shear rate of 10000 $s^{-1}$ one scale part corresponds to 100 mPas. At a shear rate of 2500 $s^{-1}$ one scale part corresponds to 400 mPas. Further, at a minimum shear rate of 78 $s^{-1}$ one part corresponds to 12800 mPas and thus, a maximal viscosity of 128000 mPas can be determined. The viscosity η is calculated by the following equation:

$$\eta = scale\ value \times 100 \times \frac{10000}{D}\,[mPas],$$

wherein D is the shear rate.

**Determination of glass transition temperature $T_G$**

To determine the glass transition temperature of the thermoset, the unsaturated polyesteretheramide resins were prepared and cured as per the embodiments, brought to the required sample size of approximately 50 x 10 x 2.5 mm and characterized by means of dynamic mechanical analysis (DMA).

By using the DMA 242 manufactured by Netzsch the storage modulus and loss modulus as well as the loss factor (tan δ) of a sample were determined as a function of the applied temperature, time and frequency of a sinusoidal vibration load.

Parameters and measurement settings in the DMA analyses performed:

| | |
|---|---|
| Deformation mode: | Dual cantilever |
| Dynamic force: | 7.55 N |
| Static force: | 4 N |
| Temperature range: | 50 - 250 °C |
| Heating range: | 2 °C/min |
| Frequency: | 10 Hz |
| Atmosphere: | $N_2$ |
| Flow rate $N_2$: | 5 ml/min |

Glass transition temperature $T_G$ is determined by evaluating the maximum value of tan $\delta$ - T - curve.

**Decomposition of thermoset at high temperatures via mass loss determined by thermogravimetric analysis (TGA)**

**Sample preparation**

**Admix initiator to resin**

For the sample preparation, a resin containing 50 wt.% of the corresponding composition and 50 wt.% of styrene was prepared. As soon as the solution was homogenous, 0.3 wt.% of the UV initiator phenylbis(2,4,6-trimethylbenzoyl)phosphine oxide were added and stirred in for 3 hours to yield a homogenous mixture.

**Casting the specimen**

Subsequently, the resin was drawn up in a syringe and injected into a mold without bubbles. The mold consists of a 4 mm PTFE frame from which 10x80 mm contours were milled out. The upper and lower surfaces of the mold consist of glass to allow UV radiation to pass.

**Curing the specimen**

Once the resin has been injected, the form (including the glass plates) was cured in a UV chamber (Heraeus Suntest) for 5 minutes. Then, the plate was reversed and cured for another 17 minutes.
The specimen was demolded and subsequently post-cured in the oven at 200 °C for 1 h and at 250 °C for another hour.

**Pulverization**

After cooling, a post-cured specimen was pulverized in a Retsch Ultrazentrifugalmühle ZM200 with a 1 mm mesh to obtain the powder needed for TGA analysis.

**Analysis**

TGA was carried out with a Netzsch STA 409 thermobalance.
Parameters:

| | |
|---|---|
| Initial weight | 40mg powder |
| Crucible | $Al_2O_3$ |
| Reference | $Al_2O_3$ |
| Gaseous atmosphere | Air |
| Gas flow | 100 ml/min |
| Temperature range and heating rate | 40 °C to 700 °C with 20 °C/min |

The analysis is based on the maximal temperatures measured until the sample has lost 2% of its original mass.

**Determination of the molecular mass**

The determination of the different molecular mass of the unsaturated polyesteretheramide was carried out according to DIN 55672-1:2007-08, wherein the number average molar mass $M_n$ and the mass average molar mass $M_w$ were determined.
In addition, peak molar mass (Mp) was determined as the molar mass corresponding to the highest point of the highest peak of chromatogram. Measurement is done according to DIN 55672-1:2007-08, but DIN 55672-1:2007-08 does not define peak molar mass.

Sample preparation:

The samples were prepared by conducting the following steps:

1. Crushing unsaturated polyesteretheramide.

2. Dissolving 50 mg of unsaturated polyesteretheramide in 9 g eluent.

3. Waiting for at least 3h to dissolve.

4. Filtration through 0.45 μm PTFE-filter into 1,5 mL vials.

Measurement: The samples as prepared above were subjected to a measurement, wherein the following parameters were met:

| | |
|---|---|
| Eluent | THF, 99% stab. with 250 - 350ppm BHT |
| Columns | 1 x Precolumn, 8 x 50 mm, PSS Polymer Standards Service GmbH, SDV 3 μm 1000Å |
| | 2 x Column, 8 x 300 mm, PSS Polymer Standards Service GmbH, SDV 3 μm 1000Å |
| Column Temp. | 35 °C |
| Detector | Refractive Index Detector @ 35 °C |
| Calibration | PSS Polystyrene Standard Kit (266 -66.000 g/mol) |
| Software | WinGPC from PSS Polymer Standards Service GmbH |

## EXAMPLES

### Reagents and solvents

All chemicals were purchased from commercial sources and used as received, i.e. without further purification. 2-Methyl-2-Phenyl-propan-1,3-diol was provided by BASF, CI, Ludwigshafen, Germany.

### Apparatus

The components were added to a 2 liter four-necked round glass flask, with a one arm paddle-agitator on the central taper joint. One side-taper joint was used to attach the PT-100 temperature sensor. In order to reduce loss of volatile components and to enable the water to leave the reaction flask, a column filled with Raschig Rings was attached to one taper joint. Attached to the column is a thermometer to read the head temperature and a distillation bridge in order to condense and separate the formed water, which was collected in a graduated cylinder in order to measure the progress of the condensation reaction. The nitrogen inlet was integrated into the stirrer fixture. The reaction temperature during condensation reaction was controlled as a function of time via a LC4-Controller plus a software, both from Julabo. The temperature was measured by a PT-100 temperature sensor, directly in the melt. As a heating device a 600 Watt LabHeat hemispherical heating mantle for 2 liter flasks was used.

### Procedures

### Preparation of the unsaturated polyesteretheramide and unsaturated polyester

Size of unsaturated polyesteretheramide synthesis: 5 to 6.5 mole of component (i) and 5 to 6.5 mole of components (ii), (iii), (iv) and (v) were used.

For the examples E1-31 and the references Ref. E1-6 all components, inhibitors and catalysts (for components, inhibitors and catalysts and their amounts see table 1) were transferred into a 4-necked glass flask. Under continuous purging with nitrogen the composition was heated up stepwise. The reaction was carried out under continuous stirring with a one arm-blade stirrer at 400 rpm. In the beginning of the reaction the rotation speed of the stirrer was limited in some cases because of high viscosity of the composition mixture. In some cases, distilled water was added in order to enable easier stirring. The additional water was removed during the reaction along with the water from polycondensation.

After the temperature program was finished, the product was allowed to cool to about 185 °C. Then the product was poured into a metal pan. After solidification the obtained polyesteretheramide was crunched to smaller pieces having the corresponding composition and properties as shown in table 1.

E1-3

The temperature was increased until 140 °C were reached. After one hour at 140 °C, temperature was increased by 10 °C every hour until 170 °C were reached. After one hour at 170 °C, temperature was increased continuously by 12 °C/h per hour up to 210 °C. After one hour at 210 °C the temperature program was finished.

E4-9, E12-31 and Ref. E1; Ref. E4-6

The temperature was increased until 140 °C were reached. After one hour at 140 °C, temperature was increased by 10 °C every hour until 170 °C were reached. After one hour at 170 °C, temperature was increased continuously by 12 °C/h up to 200 °C. After one hour at 200 °C the temperature program was finished.

E11

As a prepolymer forming step, 0.21 molar parts of maleic anhydride and 0.1 molar part of 2,2,4,4-tetramethylcyclobutane-1,3-diol were heated to 85 °C. Temperature was kept between 85 °C and 130 °C for 1 hour. Afterwards temperature was constantly increased to 160 °C. Then the prepolymer was poured into a metal pan for cooling and solidification. For synthesis of the unsaturated polyesteretheramide the prepolymer and all residual components were heated to 140 °C. After one hour at 140 °C, temperature was increased by 10 °C every hour until 170 °C were reached. After one hour at 170 °C, temperature was increased continuously by 12 °C/h up to 200 °C. After one hour at 200 °C the temperature program was finished.

E10 and Ref. E3

E10 and Ref. E3 both are based on a high amount of maleic anhydride. Because the addition of maleic anhydride to the diols is strongly exothermic - after being heated to about 80°C, the temperature rose to 150°C if there was no cooling applied - the temperature step at 140 °C was left out. The temperature was increased until 150 °C were reached. After one hour at 150°C, temperature was increased by 10 °C every hour until 170 °C were reached. After one hour at 170 °C, temperature was increased continuously by 12 °C/h up to 200°C. After one hour at 200 °C the temperature program was finished.

Ref. E2

The temperature was increased until 140 °C were reached. After one hour at 140 °C, temperature was increased by 10 °C every hour until 170°C were reached. After one hour at 170 °C, temperature was increased continuously by 12 °C/h up to 200 °C. After two hours at 200 °C the temperature program was finished.

| | | | | | | | | Polyesteretheramide Pro perties | | | | | | |
|---|---|---|---|---|---|---|---|---|---|---|---|---|---|---|
| | Component (i) [molar Part] | Component (ii) [molar Part] | Component (iii) [molar Part] | Component (iV) [molar Part] | Component (v) [molar Part] | HQ [ppm] | Fascat 4100 [ppm] | Solubility of upeea in styrene | Acid value of upeea KOH/g] | Melt-viscosity @ 150°C [mPas] | Melt-viscosity @ 150°C shear rate [/s] | Number average molar mass [g/mol] | Mass average molar [g/mol] mass | Peak molar mass [g/mol] |
| E1 | FA [1.000]<br>MA [0.040] | NPG [0.333] | 10.3331 | TCD-DM | IPDA [0.150] | 500 | 400 | 56 | 28 | 9280 | 625 | - | - | - |
| E2 | FA [0.980]<br>PA [0.080] | NPG [0.333] | 10.333] | TCD-DM | IPDA [0.150] | 500 | 400 | 68 | 28 | 5440 | 1250 | - | - | - |
| E3 | FA [0.990]<br>PA [0.040]<br>MA [0.020] | NPG [0.333] | ISOS [0.323] | TCD-DM [0.193] | IPDA [0.150] | 500 | 400 | 63 | 27 | 8480 | 625 | - | - | - |
| E4 | FA [0.960]<br>PA [0.040]<br>MA [0.020] | NPG [0.400] | ISOS [0.267] | 1,4-CHDM [0.200] | IPDA [0.133] | 500 | 400 | 66 | 25 | 8000 | 625 | - | - | - |
| E5 | FA [0.900]<br>PA [0.040]<br>MA [0.020]<br>TMAA [0.060] | NPG [0.400] | ISOS | 1,4-CHDM [0.200] | IPDA [0.133] | 500 | 400 | 69 | 25 | 8800 | 625 | 1458 | 4095 | 3421 |
| E6 | FA [1.020] | NPG [0.400] | ISOS [0.300] | 1,4-CHDM [0.233] | IPDA [0.100] | 500 | 400 | 61 | 31 | 5760 | 1250 | 1542 | 4184 | 3285 |
| E7 | FA [1.020] | NPG [0.400] | ISOS [0.280] | 1,4-CHDM [0.233] | IPDA [0.120] | 500 | 400 | 63 | 18 | 15360 | 625 | - | - | - |
| E8 | FA [1.020] | NPG [0.400] | ISOS [0.260] | 1,4-CHDM [0.233] | IPDA [0.140] | 500 | 400 | 67 | 22 | 11200 | 625 | 1494 | 4456 | 3038 |
| E9 | FA [1.020] | NPG [0.400] | ISOS [0.250] | 1,4-CHDM [0.233] | IPDA [0.150] | 500 | 400 | 62 | 19 | 6560 | 1250 | 1465 | 4374 | 2829 |
| E10 | MA [1.033] | NPG [0.400] | ISOS [0.267] | 1,4-CHDM [0.233] | IPDA [0.133] | 500 | 400 | 56 | 24 | 2320 | 2500 | 1356 | 4146 | 2947 |

(continued)

| | | | | | | | | Polyesteretheramide Pro perties | | | | | | |
|---|---|---|---|---|---|---|---|---|---|---|---|---|---|---|
| | Component (i) [molar Part] | Component (ii) [molar Part] | Component (iii) [molar Part] | Component (iV) [molar Part] | Component (v) [molar Part] | HQ [ppm] | Fascat 4100 [ppm] | Solubility of upeea in styrene | Acid value of upeea KOH/g] | Melt-viscosity @ 150°C [mPas] | Melt-viscosity @ 150°C shear rate [/s] | Number average molar mass [g/mol] | Mass average molar [g/mol] mass | Peak molar mass [g/mol] |
| E11 | FA [0.820] MA [0.210] | NPG [0.300] | ISOS [0.267] | 1,4-CHDM [0.233] CBDO [0.100] | IPDA [0.133] | 500 | 400 | 63 | 28 | 5200 | 1250 | 1369 | 3647 | 2735 |
| E12 | FA [1.000] | NPG [0.290] | ISOS [0.280] | MPPD [0.290] | IPDA [0.140] | 500 | 400 | 51 | 23 | 3680 | 2500 | 1427 | 4176 | 2579 |
| E13 | FA [1.000] | NPG [0.300] | ISOS [0.300] | 1,4-CHDM [0.300] | IPDA [0.100] | 500 | 400 | 54 | 33 | 1140 | 5000 | 1427 | 3634 | 2956 |
| E14 | FA [1.000] | NPG [0.400] | ISOS [0.250] | TCD-DM [0.250] | IPDA [0.100] | 500 | 400 | 77 | 31 | 5760 | 1250 | 1609 | 4231 | 3446 |
| E15 | FA [1.000] | NPG [0.400] | ISOS [0.250] | TCD-DM [0.250] | MXDA [0.100] | 500 | 400 | 61 | 33 | 4480 | 1250 | 1372 | 3010 | 2503 |
| E16 | FA [1.000] | NPG [0.400] | ISOS [0.250] | TCD-DM [0.250] | 1,3-Diaminocyclohexane [0.100] | 500 | 400 | 69 | 32 | 2240 | 2500 | 1314 | 3045 | 2597 |
| E17 | FA [1.000] | NPG [0.400] | ISOS [0.250] | TCD-DM [0.250] | TCD-DA [0.100] | 500 | 400 | 72 | 30 | 3280 | 2500 | 1438 | 3384 | 2770 |
| E18 | FA [1.000] | NPG [0.400] | ISOS [0.250] | TCD-DM [0.250] | 1,8-Diaminomenthane [0.100] | 500 | 400 | 62 | 34 | 17280 | 313 | 1579 | 3931 | 3175 |
| E19 | FA [1.000] | NPG [0.400] | ISOS [0.250] | TCD-DM [0.250] | Bis(aminomethyl)norbonane [0.100] | 500 | 400 | 69 | 33 | 4160 | 1250 | 1442 | 3522 | 2781 |
| E20 | FA [1.000] | NPG [0.400] | ISOS [0.250] | TCD-DM [0.250] | 1,4-Diaminobutane [0.100] | 500 | 400 | 68 | 33 | 2520 | 2500 | 1396 | 3147 | 2528 |

(continued)

| | | | | | | | | Polyesteretheramide Pro perties | | | | | | |
|---|---|---|---|---|---|---|---|---|---|---|---|---|---|---|
| | Component (i) [molar Part] | Component (ii) [molar Part] | Component (iii) [molar Part] | Component (iV) [molar Part] | Component (v) [molar Part] | HQ [ppm] | Fascat 4100 [ppm] | Solubility of upeea in styrene | Acid value of upeea KOH/g] | Melt-viscosity @ 150°C [mPas] | Melt-viscosity @ 150°C shear rate [/s] | Number average molar mass [g/mol] | Mass average molar [g/mol] mass | Peak molar mass [g/mol] |
| E21 | FA [1.000] | NPG [0.400] | ISOS [0.250] | TCD-DM [0.250] | Hexamethylenediamine [0.100] | 500 | 400 | 69 | 33 | 2320 | 2500 | 1410 | 3452 | 2576 |
| E22 | FA [1.000] | NPG [0.400] | ISOS [0.250] | TCD-DM [0.250] | 2,2,4(2,4,4)-Trimethylhexamethylenediamine [0.100] | 500 | 400 | 68 | 32 | 1360 | 5000 | 1313 | 3058 | 2501 |
| E23 | FA [1.000] | NPG [0.400] | ISOS [0.250] | TCD-DM [0.250] | Dicycane [0.100] | 500 | 400 | 73 | 24 | 6800 | 1250 | 1590 | 4349 | 3518 |
| E24 | FA [1.000] | NPG [0.400] | ISOS [0.250] | TCD-DM [0.250] | Dimethyldicycane [0.100] | 500 | 400 | 63 | 48 | 2320 | 2500 | 1347 | 2974 | 2520 |
| E25 | FA [1.000] | NPG [0.400] | ISOS [0.250] | TCD-DM [0.250] | 2-(2-Aminoethoxy)-ethanol [0.100] | 500 | 400 | 74 | 26 | 5840 | 1250 | 1989 | 5483 | 4043 |
| E26 | FA [1.000] | NPG [0.400] | ISOS [0.250] | TCD-DM [0.250] | Diaminodiglycol [0.100] | 500 | 400 | 69 | 33 | 1680 | 5000 | 1501 | 3492 | 2700 |
| E27 | FA [1.000] | NPG [0.400] | ISOM [0.250] | TCD-DM [0.250] | IPDA [0.100] | 500 | 400 | 78 | 32 | 3480 | 2500 | 1379 | 3351 | 2801 |
| E28 | FA [0.980] | EMPD [0.400] | ISOS [0.250] | 1,4-CHDM [0.250] | IPDA [0.100] | 500 | 400 | 71 | 32 | 780 | 10000 | 1444 | 3482 | 2916 |
| E29 | FA [1.000] | MePrPD [0.400] | ISOS [0.250] | 1,4-CHDM [0.250] | IPDA [0.100] | 500 | 400 | 83 | 29 | 3640 | 2500 | 1738 | 4911 | 3785 |
| E30 | FA [1.000] | NPG [0.400] | ISOS [0.250] | 1,3-CHDM [0.1375] 1,4-CHDM [0.1125] | IPDA [0.100] | 500 | 400 | 82 | 36 | 2480 | 2500 | 1411 | 3621 | 2966 |

(continued)

| | | | | | | | | Polyesteretheramide Pro perties | | | | | | |
|---|---|---|---|---|---|---|---|---|---|---|---|---|---|---|
| | Component (i) [molar Part] | Component (ii) [molar Part] | Component (iii) [molar Part] | Component (iV) [molar Part] | Component (v) [molar Part] | HQ [ppm] | Fascat 4100 [ppm] | Solubility of upeea in styrene | Acid value of upeea KOH/g] | Melt-viscosity @ 150°C [mPas] | Melt-viscosity @ 150°C shear rate [/s] | Number average molar mass [g/mol] | Mass average molar [g/mol] mass | Peak molar mass [g/mol] |
| E31 | FA [0.900] PA [0.040] MA [0.020] TMAA [0.060] | NPG [0.200] EG [0.220] | ISOS [0.250] | 1,4-CHDM [0.250] | IPDA [0.133] | 500 | 400 | 56 | 42 | 1600 | 5000 | 1310 | 3041 | 2704 |
| Ref. E1 | FA [1.000] | DEG [0.51] | | TCD-DM [0.500] | | 500 | 400 | <50 | 26 | 4000 | 1250 | - | - | - |
| Ref. E2 | FA [1.000] | NPG [0.450] | ISOS [0.275] | TCD-DM [0.275] | | 500 | 400 | <50 | 28 | 12000 | 625 | 2346 | 6332 | 6258 |
| Ref. E3 | MA [1.000] | NPG [0.220] EG [0.54] EG [0.019] DPG [0.270] | | | | 500 | 400 | 70 | 17 | 3280 | 1250 | 3248 | 13500 | 8990 |
| Ref. E4 | FA [1.000] | NPG [0.400] | ISOS [0.250] | TCD-DM [0.250] 1,4-CHDM [0.100] | | 500 | 400 | <50 | 39 | 4320 | 1250 | 2080 | 4969 | 4836 |
| Ref. E5 | FA [1.000] | NPG [0.333] | ISOS [0.333] | 1,4-CHDM [0.333] | | 500 | 400 | <50 | 40 | 5600 | 1250 | 2157 | 4983 | 5122 |
| Ref. E6 | FA [1.000] | NPG [0.333] | ISOS [0.333] | TCD-DM [0.333] | | 500 | 400 | < 50 | 51 | 2320 | 2500 | 1596 | 3261 | 3184 |
| Ref. E7 | Aliancys™ P18-03 | comincercial | product | data not available | | no data | no data | 79 | n.d. | n.d. | n.d. | n.d. | n.d. | n.d. |

| | | | |
|---|---|---|---|
| HQ | hydroquinone | ISOS | isosorbide |
| Fascat 4100 | butylstannoic acid | ISOM | isomannide |
| upeea | unsaturated polyesteretheramide | TCD-DM | tricyclodecanedimethanol (mixture of isomers) |
| FA | fumaric acid | 1,4-CHDM | 1,4-cyclohexanedimethanol (mixture of isomers) |
| MA | maleic acid | MPPD | 2-methyl-2-phenyl-propane-1,3-diol |
| PA | phthalic anhydride | 1,3-CHDM | 1,3-cyclohexanedimethanol (mixture of isomers) |
| TMAA | trimellitic anhydride | IPDA | isophoronediamine |
| NPG | 2,2-dimethylpropane-1,3-diol | MXDA | m-xylylenediamine |
| DEG | diethylene glycol | TCD-DA | tricyclodecane diamine (mixture of isomers) |
| EMPD | 2-ethyl-2-methyl-propane-1,3-diol | Dicycane | 4,4'-diamino-dicyclohexylmethane |
| MePrPD | 2-methyl-2-propyl-propane-1,3-diol | Dimethyldicycane | 3,3'-Dimethyl-4,4'-diamino-dicyclohexylmethane |
| EG | ethylene glycol | CBDO | 2,2,4,4,-tetramethylcyclobutane-1,3-diol |
| BD1,4 | Butane-1,4-diol | | |
| PG | propylene glycol | | |
| DPG | dipropylene glycol (mixture of isomers) | | n.d.: not determined, no proper curing possible |

**Preparation of the unsaturated polyesteretheramide resin and the unsaturated polyester resin**

The polyesteretheramide obtained from Examples 1 to 31 and Reference Example 1 to 6 (50 wt.%) and styrene (50 wt.%) were weighted, transferred into a brown glass bottle and moved for about one day on a shaker and afterwards on a roller to obtain a solution of the unsaturated polyesteramide in the styrene which corresponds to the unsaturated polyesteretheramide resins $E1_{resin}$ to $E31_{resin}$ and unsaturated polyester resins Ref. $E1_{resin}$ to Ref. $E6_{resin}$.

With reference to Table 1 it can be seen that the unsaturated polyesteretheramide of present Examples 1 to 31 have a compatibility of at least 50%. Thus, the unsaturated polyesteretheramide resin $E1_{resin}$ to $E31_{resin}$ prepared as described above resulted in a clear solution.

Further, the unsaturated polyester of present Reference Example 1 to 7 have a sufficient solubility (at most 51%, but often less than 30%) and thus did not yield a clear resin in styrene but often formed a two- phase liquid mixture appearing white. Thus, the corresponding unsaturated polyester resin Ref. $E1_{resin}$ to Ref. $E6_{resin}$ cannot be considered as a clear solution and is not suitable for application.

The Reference Ref. E7 is a commercial available, unsaturated polyester resin from Aliancys™ called Palapreg® P18-03. It comes as a clear solution in styrene, with a solids content of 64 to 65.5% according to the product datasheet.

**Preparation of the thermoset**

To obtain thermosets T1 to T31 and Ref. T1 to Ref. T7, unsaturated polyesteretheramide resin $E1_{resin}$ to $E31_{resin}$ and unsaturated polyester resin Ref. $E1_{resin}$ to Ref. E7 were put into a mold until the bottom of the mold was completely covered. Then these resin layers were covered with a layer of a non-crimp biaxial 0°/90° glass fibers fabric ((831 g/m$^2$ 0°/90°), from Saertex GmbH, Saerbeck, Germany), a further layer of the resin was applied and bubbles were removed via a vent role. A further layer of the glass fibers fabric transposed by 90° was applied and laminated with the resin. Finally, a third layer of the glass fibers fabric in direction of the first fabric was applied and again bubbles were removed by a vent role. The samples were cured in a convection oven at 200 °C for 1 hour and afterwards directly for 1 hour at 250 °C. After being cooled to 23 °C (room temperature) cut to the desired sample size.

The obtained thermosets exhibit the properties as shown in Table 2:

| Thermoset | Starting Compound [resin] | Glass transition temperature (10 Hz) [°C] |
|---|---|---|
| T1 | $E1_{resin}$ | 241 |
| T2 | $E2_{resin}$ | 231 |
| T3 | $E3_{resin}$ | 242 |
| T4 | $E4_{resin}$ | 236 |
| T5 | $E5_{resin}$ | 235 |
| T6 | $E6_{resin}$ | 242 |
| T7 | $E7_{resin}$ | 250 |
| T8 | $E8_{resin}$ | 238 |
| T9 | $E9_{resin}$ | 237 |
| T10 | $E10_{resin}$ | 221 |
| T11 | $E11_{resin}$ | 234 |
| T12 | $E12_{resin}$ | 233 |
| T13 | $E13_{resin}$ | 236 |
| T14 | $E14_{resin}$ | 237 |
| T15 | $E15_{resin}$ | 229 |
| T16 | $E16_{resin}$ | 227 |
| T17 | $E17_{resin}$ | 227 |
| T18 | $E18_{resin}$ | 230 |
| T19 | $E19_{resin}$ | 231 |
| T20 | $E20_{resin}$ | 220 |
| T21 | $E21_{resin}$ | 220 |
| T22 | $E22_{resin}$ | 215 |
| T23 | $E23_{resin}$ | 234 |
| T24 | $E24_{resin}$ | 227 |
| T25 | $E25_{resin}$ | 237 |
| T26 | $E26_{resin}$ | 216 |
| T27 | $E27_{resin}$ | 232 |
| T28 | $E28_{resin}$ | 225 |
| T29 | $E29_{resin}$ | 221 |
| T30 | $E30_{resin}$ | 222 |
| T31 | $E31_{resin}$ | 220 |
| Ref. T1 | Ref. $E1_{resin}$ | 233 |
| Ref. T2 | Ref. $E2_{resin}$ | 250 |
| Ref. T3 | Ref. $E3_{resin}$ | 179 |
| Ref. T4 | Ref. $E4_{resin}$ | 239 |
| Ref. T5 | Ref. $E5_{resin}$ | n.d. |
| Ref. T6 | Ref. $E6_{resin}$ | 228 |
| Ref. T7 | Palapreg® P18-03 | 160 |

As can be seen from Table 2, the clear unsaturated polyesteretheramide resins $E1_{resin}$ to $E31_{resin}$ result, when cured, in thermosets having advantageously high glass transition temperatures from 215 °C to 250 °C, while the glass transition temperatures of the reference Examples spread over a wide temperature range starting from 160° to very high glass transition temperatures of 250 °C.

**Temperature resistance of the thermoset.**

Heating a thermoset over a certain temperature will result in a mass loss of the thermoset due to decomposition processes. As long as said mass loss is less than 2 % of the initial mass of the thermoset, said thermoset can be regarded as thermoresistant until said temperature. In the following the maximal temperatures were determined at which the corresponding thermosets still show a mass loss of less than 2%. Theses temperatures are listed in Table 3.

The maximal temperature until a mass loss of less than 2 % of the thermoset is determined. Further, the present invention relates to a thermoset comprising polyesteretheramide resin having an excellent temperature resistance with a mass loss of less than 2%, when heated to 320 °C, wherein the mass loss is determined by thermogravimetric analyses (TGA).

Table 3

| | Loss of mass >2% during TGA [°C] |
|---|---|
| T5 | 327 |
| T10 | 325 |
| T13 | 327 |
| T15 | 323 |
| T16 | 325 |
| T24 | 322 |
| T29 | 320 |
| Ref. T2 | 317 |
| Ref. T3 | 315 |
| Ref. T7 | 317 |

As can be seen from Table 3, the thermosets according to the present invention show a mass loss of less than 2 % until heated to a high temperature of at least 320°C, while the reference thermosets show a mass loss of less than 2% only until heated to 317°C at the most.

## Claims

1. Composition comprising (i) an unsaturated dicarboxylic acid, an ester and / or an anhydride thereof, (ii) aliphatic diol, (iii) dianhydrohexitol (iv) cycloaliphatic diol or aromatic aliphatic diol, and (v) an amide-forming agent.

2. Composition according to claim 1, wherein (i) unsaturated dicarboxylic acid, an ester and / or an anhydride thereof comprises maleic acid, fumaric acid, itaconic acid, mesaconic acid, citraconic acid and/or maleic anhydride.

3. Composition according to claim 1 or 2, wherein (ii) aliphatic diol comprises ethane-1,2-diol, propane-1,2-diol, propane-1,3-diol, butane-1,4-diol, *Z*-2-butene-1,4-diol, 2-methyl-propane-1,3-diol, 2-(2-hydroxyethoxy)ethane-1-ol, pentane-1,5-diol, 3-methyl-pentane-1,5-diol, mixture of 4-oxa-2,6-heptanediol, 2-(2-hydroxy-propoxy)-propane-1-ol, and 2-(2-hydroxy-1-methyl-ethoxy)-propane-1-ol, 2,2-dimethylpropane-1,3-diol, 2-ethyl-2-methyl-propane-1,3-diol, 2-butyl-2-ethyl-propane-1,3 diol.

4. Composition according to any one of claims 1 to 3, wherein (iii) dianhydrohexitol comprises 1,4:3,6-dianhydrohexitol.

5. Composition according to any one of claims 1 to 4, wherein (iv) cycloaliphatic diol or aromatic aliphatic diol comprises 1,3-cyclohexanedimethanol, 1,4-cyclohexandimethanol, mixture of 1,3-cyclohexanedimethanol and 1,4-cyclohexanedimethanol, tricyclodecanedimethanol, 4,4'-isopropylidenedicyclohexanol, 2,2,4,4-tetramethyl-1,3-cyclobutanediol and/or 2-methyl-2-phenyl-propane-1,3-diol.

**6.** Composition according to any one of claims 1 to 5, wherein (v) amide-forming agent is selected from 1,4-diaminobutane, 1,5-diaminopentane, 1,6-diaminhexane, 2,2,4-trimethylhexane-1,6-diamine, 2,4,4-trimethylhexane-1,6-diamine, 2-(2-aminoethoxy)ethylamine, 1,3-diaminomethyl cyclohexane, 1,4-diaminomethyl cyclohexane, 1,3-diamino-2-methylcyclohexane, 1,3-diamino-4-methylcyclohexane, 4-(2-aminopropan-2-yl)-1-methylcyclohexanamine (1,8-diaminomenthane), 3-aminomethyl-3,5,5-trimethylcyclohexylamin, bicycloheptanedimethylamine, tricyclodecanedimethylamine, 4,4'-methylen-bis-(cyclohexylamine), 4,4'-diamino-3,3'-dimethylcyclohexyl-methane, 1,3-bis(aminomethyl)benzene, 2-(2-aminoethoxy)ethanol and 1,4-bis(aminomethyl)benzene).

**7.** Composition according to any one of claims 1 to 6 comprising

(i) 45 to 55 mol% of unsaturated dicarboxylic acid, an ester and/ or an anhydride thereof;
(ii) 4 to 39 mol% of aliphatic diol;
(iii) 2to 31 mol% of dianhydrohexitol;
(iv) 2 to 31 mol% of cycloaliphatic diol or an aromatic aliphatic diol; and
(v) 1 to 22 mol% of amide-forming agent.

**8.** Unsaturated polyesteretheramide obtainable by condensation reaction of the composition according to any one of claims 1 to 7.

**9.** Method for preparing an unsaturated polyesteretheramide comprising the steps of

(a) providing a composition according to any one of claims 1 to 7 and
(b) reacting the composition of step (a) at an elevated temperature.

**10.** Unsaturated polyesteretheramide resin, comprising unsaturated polyesteretheramide according to claim 8 or obtained by the method according to claim 9 and a reactive diluent.

**11.** Use of the unsaturated polyesteretheramide resin according to claim 10 for SMC-technology (sheet molding composite technology), BMC-technology (bulk molding technology), resin transfer molding (RTM), compression, hot molding, FCS-technology (fiber composite spraying technology), injection molding, vacuum-assisted resin infusion, continuous sheet production, filament winding, rotation molding, lamination, vacuum-pressure-impregnation (VPI-process), casting; bundling, bonding, coating such as gel coating, top coating, spray coating, in-mold coating, enamel coating, knife-coating, spincoating, dipping, dropping, painting, etc., wire painting, filling, fiber-spinning, foaming and pultrusion.

**12.** Thermoset obtainable by curing the unsaturated polyesteretheramide resin according to claim 10.

**13.** Method for preparing a thermoset comprising the steps of

($\alpha$) providing an unsaturated resin according to claim 10, and
(ß) reacting the unsaturated polyesteretheramide resin of step (a) at an elevated temperature and/or by irradiation.

**14.** Use of the thermoset according to 12 or obtained by the method according to claim 13 for the production of tanks, polymer concrete, apparatus construction, medical equipment, railroad equipment, oil and gas field equipment, gelcoats, topcoats, protective layers and other coating applications such as spray coating, inmold coating and painting, putties, cast products, porous materials (e.g. foams, membranes etc.), production of fibers, production of tools, electronic devices, flame retardant thermosets, profiles, containers, moldings, polymer parts, long field lamp carrier, oil sinks, sheets/plates, bondings and pipes under provision that the pipes are not cured-in-place pipes (CIPP).

**15.** Thermoset comprising polyesteretheramide having an excellent temperature resistance with a mass loss of less than 2% when heated to 320 °C, wherein the mass loss is determined by thermogravimetric analyses (TGA).

Europäisches Patentamt
European Patent Office
Office européen des brevets

# EUROPEAN SEARCH REPORT

Application Number
EP 18 19 6013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2017/335055 A1 (JACQUEL NICOLAS [FR] ET AL) 23 November 2017 (2017-11-23)<br>* paragraph [0001]; claims 1-18 *<br>* paragraph [0047] - paragraph [0050] *<br>* paragraph [0111] - paragraph [0115] *<br>* paragraph [0025] * | 1-5,7-10<br>6,11-15 | INV.<br>C08G63/685<br>C08G69/40<br>C08G69/44<br>C08L77/12<br>C08L77/06<br>B32B17/04<br>B32B27/34<br>B32B27/36 |
| A | US 2011/040004 A1 (ANDJELKOVIC DEJAN D [US] ET AL) 17 February 2011 (2011-02-17)<br>* paragraphs [0001], [0002], [0007] - paragraph [0009]; claims 1-22 *<br>* examples 11, 15 * | 1-15 | |
| A | US 5 162 401 A (ROSS LOUIS R [US] ET AL) 10 November 1992 (1992-11-10)<br>* column 1, line 10 - line 30; claims 1-21 * | 1-15 | |
| A,D | DE 41 14 249 A1 (BASF AG [DE]) 5 November 1992 (1992-11-05)<br>* page 2, line 3 - line 16; claims 1-4 *<br>* page 2, line 38 - page 3, line 15 * | 1-15 | TECHNICAL FIELDS SEARCHED (IPC)<br>C08G<br>C09J<br>C08L<br>B32B |

The present search report has been drawn up for all claims

2

| Place of search | Date of completion of the search | Examiner |
|---|---|---|
| Munich | 12 March 2019 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 18 19 6013

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2019

| Patent document cited in search report | Publication date | Patent family member(s) | Publication date |
|---|---|---|---|
| US 2017335055 A1 | 23-11-2017 | CA 2965900 A1 | 06-05-2016 |
| | | CN 107148438 A | 08-09-2017 |
| | | EP 3212692 A1 | 06-09-2017 |
| | | FR 3027906 A1 | 06-05-2016 |
| | | JP 2017533320 A | 09-11-2017 |
| | | KR 20170076672 A | 04-07-2017 |
| | | SG 11201703370T A | 30-05-2017 |
| | | US 2017335055 A1 | 23-11-2017 |
| | | WO 2016066956 A1 | 06-05-2016 |
| US 2011040004 A1 | 17-02-2011 | CN 102597084 A | 18-07-2012 |
| | | EP 2464690 A1 | 20-06-2012 |
| | | ES 2585255 T3 | 04-10-2016 |
| | | US 2011040004 A1 | 17-02-2011 |
| | | WO 2011019557 A1 | 17-02-2011 |
| US 5162401 A | 10-11-1992 | AU 6730090 A | 31-05-1991 |
| | | BR 9006979 A | 24-12-1991 |
| | | CA 2026636 A1 | 01-05-1991 |
| | | CN 1052490 A | 26-06-1991 |
| | | DE 69031800 D1 | 22-01-1998 |
| | | DK 0451258 T3 | 24-08-1998 |
| | | EP 0451258 A1 | 16-10-1991 |
| | | ES 2113863 T3 | 16-05-1998 |
| | | JP H04502645 A | 14-05-1992 |
| | | NO 912465 A | 24-06-1991 |
| | | US 5162401 A | 10-11-1992 |
| | | WO 9106604 A1 | 16-05-1991 |
| DE 4114249 A1 | 05-11-1992 | DE 4114249 A1 | 05-11-1992 |
| | | EP 0512294 A2 | 11-11-1992 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4114249
- DE 10249400